(19) Europäisches Patentamt
European Patent Office
Office européen des brevets

(11) Veröffentlichungsnummer: **0 001 091**
**B1**

(12) # EUROPÄISCHE PATENTSCHRIFT

(45) Veröffentlichungstag der Patentschrift: **22.09.82**

(51) Int. Cl.³: **C 04 B 19/04**

(21) Anmeldenummer: **78100784.4**

(22) Anmeldetag: **30.08.78**

(54) **Präpolymere auf Basis von Alkali -und/oder Erdalkalisilikaten und Metalloxiden, Verfahren zu ihrer Herstellung und ihre Verwendung als Formmassen.**

(30) Priorität: **06.09.77 CH 10854/77**

(43) Veröffentlichungstag der Anmeldung:
**21.03.79 Patentblatt 79/6**

(45) Bekanntmachung des Hinweises auf die Patenterteilung:
**22.09.82 Patentblatt 82/38**

(84) Benannte Vertragsstaaten:
**CH DE FR GB NL SE**

(56) Entgegenhaltungen:
**FR - A - 984 627**
**FR - A - 2 361 314**
**NL - A - 291 298**
**NL - A - 6 805 003**
**US - A - 1 956 895**
**US - A - 3 102 037**

(73) Patentinhaber: **CIBA-GEIGY AG**
**Patentabteilung Postfach**
**CH-4002 Basel (CH)**

(72) Erfinder: **Kartschmaroff, Peter**
**Waldstrasse 6**
**CH-4144 Arlesheim (CH)**
Erfinder: **Forster, Ewald, Dr.**
**Obertorweg 72**
**CH-4123 Allschwil (CH)**
Erfinder: **Schaffner, Armin**
**Hegenheimerstrasse 106**
**CH-4055 Basel (CH)**

Courier Press, Leamington Spa, England.

# 0 001 091

### Präpolymere auf Basis von Alkali- und/oder Erdalkalisilikaten und Metalloxiden, Verfahren zu ihrer Herstellung und ihre Verwendung als Formmassen

Gegenstand der vorliegenden Erfindung sind aus Alkali- und/oder Erdalkalisilikaten und Metalloxiden erhältliche Präpolymere, Verfahren zu ihrer Herstellung und ihre Verwendung als Formmassen, insbesondere in Pressmassen.

Die Verwendung von Natriumsilikatlösungen (Wasserglas) als Dichtungsmassen oder mineralische Kitte ist seit langem bekannt. Derartige Kitte härten bei Raumtemperatur in wenigen Stunden durch; sie sind also nicht lagerstabil. Die aus Alkalisilikatlösungen durch Erhitzen auf höhere Temperaturen unter gleichzeitiger Formgebung erhaltenen Formkörper oder Formstoffe weisen den Nachteil auf, dass sie wegen zu geringer Festigkeit als Werkstoff nicht in Frage kommen; überdies sind sie wasserlöslich und somit gegenüber Luftfeuchtigkeit ungenügend resistent.

Es hat nicht an Versuchen gefehlt, den Nachteil der ungenügenden Luftfeuchtigkeitsresistenz dadurch zu verringern bzw. zu beheben, indem man zur Herstellung der Formstoffe modifizierte Alkalisilikatlösungen verwendet.

So wird zum Beispiel in der DT—PS 594 257 vorgeschlagen, als Ausgangsmaterial zur Herstellung von Formstoffen mit verbesserter Wasserresistenz eine konzentrierte Lösung aus Alkaliboraten und Alkalisilikaten oder aus Alkaliborsilikaten zu verwenden. Diese Formstoffe weisen zwar eine vergleichsweise verbesserte Feuchtigkeitsresistenz auf, sind aber nicht wasserdicht und müssen zu diesem Zweck mit Harzlösung, Asphalt etc. imprägniert werden. Ferner wird in der DT—OS 1 571 607 offenbart, dass man die Feuchtigkeitsresistenz von Binde- oder Imprägniermittel auf Basis von Wasserglas durch Zugabe von Metallverbindungen mit Korngrösse unter 100 $\mu$ erhöhen kann, wobei diese Partikel ein Ausfällen von $SiO_2$ und Bildung von Kieselgel bewirken. Auch die auf diese Weise erhaltenen Produkte bedürfen zur Verbesserung der Feuchtigkeitsresistenz noch einer Oberflächenbehandlung mit z.B. Bitumen, Wachsen, Stearaten oder Silikonen.

In der GB—PS 1 367 166 wird ferner eine aus wasserfreiem Natriumsilikat, wässriger Natriumsilikatlösung und Borsäure bestehende homogene Masse zwecks Lösung des wasserfreien Natriumsilikats erhitzt und nach Abkühlung zerkleinert. Durch erneutes Erhitzen werden diese Partikel teilweise wasserfrei gemacht, wobei ein poröses, vorgeschäumtes Material erhalten wird, das durch weiteres Erhitzen in vollständig expandierte Schaumkörper übergeführt werden kann. Zur Herstellung von Pressmassen sind jedoch derartige modifizierte Natriumsilikate nicht geeignet weil sie beim Verpressen inhomogene poröse Produkte ergeben, die beim Entformen bis zum doppelten Volumen aufblähen.

In der GB—PS 1 077 973 wird bereits die Herstellung von anorganischen Polymeren durch Umsetzung von Aluminiumoxychlorid mit z.B. Alkalimetallsilikat oder Alkalimetallmetasilikat beschrieben. Diese Polymeren lassen sich verpressen, weisen aber den Nachteil auf, dass zu ihrer Verarbeitung übermässig lange Presszeiten erforderlich sind.

Es wurde nun gefunden, dass man durch stufenweises Kondensieren von Alkali- und/oder Erdalkalisilikaten mit Metalloxiden, indem man Mischungen aus festen und in Wasser gelösten Alkali- und/oder Erdalkalisilikaten und bestimmten Metalloxiden einem speziellen Trocknungs- und Vorreaktionsverfahren unterwirft, Präpolymere erhält, die sich im Vergleich zu den bekannten anorganischen Formulierungen auf Basis von Silikaten als Pressmassen und für Laminate mit den für organische Formmassen eingesetzten Maschinen unter den bei solchen Materialien üblichen Bedingungen, wie z.B. kurzen Presszeiten, zu Formstücken mit bemerkenswerten Eigenschaften, insbesondere ausgezeichneter Wärmebeständigkeit, inhärenter Flammenresistenz, guter mechanischer Festigkeit und Lichtbeständigkeit, verarbeiten lassen.

Gegenstand der vorliegenden Erfindung sind somit neue Präpolymere aus Alkali- und/oder Erdalkalisilikaten und Metalloxiden, die erhalten werden, indem man eine Mischung aus festen und/oder in Wasser gelösten Alkali- und/oder Erdalkalisilikaten, gegebenenfalls unter Zugabe von Wasser, und aus zwei- bis vierwertigen Metalloxiden, wobei in der Mischung das Verhältnis von Metalloxid zu Silikat 1:1 bis 1:9 Gewichtsteile Trockensubstanz beträgt und wobei die homogenisierte Mischung einen Wassergehalt von 10 bis 50 Gewichts-%, bezogen auf die gesamte Mischungsmenge, aufweist, im Temperaturbereich von 10 bis 50°C solange vorreagieren lässt, bis der Wassergehalt der Mischung sich um 0,1 bis 25 Gewichts-% verringert und ein zur Zerkleinerung genügend zähtrockenes Produkt erhalten wird, dieses zerkleinert und anschliessend bei Temperaturen bis zu 120°C so lange erhitzt, bis das erhaltene Präpolymer einen Wassergehalt von 20 bis 2 Gewichts-% aufweist.

Vorzugsweise betrifft die Erfindung Präpolymere aus Alkali- und/oder Erdalkalisilikaten und Metalloxiden, die erhalten werden, indem man eine homogenisierte Mischung aus festen und in Wasser gelösten Alkali- und/oder Erdalkalisilikaten und zwei- bis vierwertigen Metalloxiden, wobei in der Mischung der Anteil der in Wasser gelösten Silikatmenge weniger als 35 Gewichts-%, vorzugsweise 20 bis 33 Gewichts-%, bezogen auf die gesamte trockene Silikatmenge, und das Verhältnis von Metalloxid zu Silikat 1:1 bis 1:6 Gewichtsteile Trockensubstanz beträgt und wobei die homogenisierte Mischung einen Wassergehalt von 25 bis 50 Gewichts-%, bezogen auf die gesamte Mischungsmenge, aufweist, im Temperaturbereich von 20 bis 50°C solange vorreagieren lässt, bis der Wassergehalt der Mischung sich um 0,1 bis 20 Gewichts-% verringert und ein zur Zerkleinerung genügend zähtrockenes Produkt erhalten wird, dieses granuliert oder mahlt und anschliessend bei Temperaturen bis zu 120°C so lange

2

erhitzt, bis das erhaltene Präpolymer einen Wassergehalt von 15 bis 4 Gewichts-% aufweist.

Insbesondere werden zur Herstellung der Präpolymeren Mischungen aus festen (hydratisierten) Alkali- und Erdalkalisilikaten, vorzugsweise Alkalisilikaten, und gelösten Alkalisilikaten (Wasserglas) sowie zweiwertigen Metalloxiden, vorzugsweise Zinkoxid, eingesetzt, wobei die homogenisierte Mischung vorzugsweise einen Wassergehalt von 30 bis 45 Gewichtsprozent, bezogen auf die gesamte Mischungsmenge, aufweist.

Im Vergleich zu den aus der GB—PS 1 367 166 und GB—PS 1 077 973 bekannten Verfahren zur Herstellung von Formstoffen auf Basis von Silikaten werden in den Mischungen zur Herstellung der erfindungsgemässen Präpolymeren einerseits weniger gelöste Silikate eingesetzt und andererseits wird auf die Auflösung der festen hydratisierten Silikate verzichtet.

Als Erdalkalisilikate verwendet man vorzugsweise die Calcium- und Magnesiumsilikate, insbesondere die Calciumsilikate, und als Alkalisilikate die Natrium- und Kaliumsilikate, vorteilhafterweise die weniger alkalischen Natriumsilikate, insbesondere solche mit einem Molverhältnis von $Na_2O/SiO_2$ von 1:3,3.

Gewünschtenfalls kann man den Mischungen zur Herstellung von Präpolymeren auch Ammoniumsilikate zugeben, insbesondere wenn die Präpolymeren bzw. die daraus hergestellten Pressmassen eine geringere Alkalität aufweisen sollen.

Als vierwertige Metalloxide eignen sich bevorzugt $PbO_2$, $TiO_2$ und $ZrO_2$ und als dreiwertige Metalloxide bevorzugt $Al_2O_3$, $Pb_2O_3$ und $Fe_2O_3$. Vorzugsweise verwendet man die zweiwertigen Metalloxide wie MgO, CaO, BaO und insbesondere ZnO.

Das Verhältnis von Metalloxid zu Alkali- und/oder Erdalkalisilikat kann zwischen 1:1 bis 1:6 Gewichtsteilen, bezogen auf Trockensubstanz, gewählt werden. Im allgemeinen werden bei hohen Anteilen an Metalloxid Präpolymere erhalten, zu deren Verarbeitung als Pressmasse kürzere Presszeiten erforderlich sind und die Pressformkörper mit einer besseren Festigkeit ergeben.

Zur Erzielung einer raschen Homogenisierung der Mischungskomponenten könen den Mischungen auch Emulgatoren zugesetzt werden. Hierfür eignen sich sowohl die neutralen als auch die anion- oder kationaktiven Emulgatoren, die der Mischung in Mengen von 0,2 bis 3,0 Gewichts-%, bezogen auf das Gesamttrockengewicht, zugegeben werden. Als besonders geeignet sind die im Handel erhältlichen Emulgatoren "Mersolat H und W" (BAYER) und "Aerosol" (AMCY). Zur Homogenisierung der Mischungskomponenten können die üblichen Mischungsvorrichtungen, wie Fluidmischer oder Muldenkneter, herangezogen werden. In der Regel stellt man erst aus den Silikatkomponenten eine homogene Mischung her und gibt anschliessend die Metalloxide zu. Bereits bei der Homogenisierung der Mischungskomponenten ist darauf zu achten, dass das Mischgut die Temperatur von 30°C nicht überschreitet, was durch entsprechenden Eindosierung der Mischungskomponenten und/oder durch Kühlung der Mischapparaturen erreicht wird.

Gegenstand der vorliegenden Erfindung ist somit auch das Verfahren zur Herstellung der neuen Präpolymeren aus Alkali- und/oder Erdalkalisilikaten und Metalloxiden. Das erfindungsgemässe Verfahren wird vorzugsweise so durchgeführt, dass man von einer homogenisierten Silikat/Metalloxid-Mischung mit einem Wassergehalt von 25 bis 50 Gewichts-%, bezogen auf die gesamte Mischungsmenge, ausgeht, diese vorzugsweise bei 20 bis 30°C vorreagieren lässt, bis der Wassergehalt der Mischung sich um 5 bis 20 Gewichts-% verringert und ein zur Zerkleinerung genügend zähtrockenes Produkt erhalten wird, und das anschliessend granulierte oder gemahlene Reaktionsprodukt bei Temperaturen von 80 bis 110°C solange erhitzt, bis das dabei erhaltene Präpolymer einen Wassergehalt von 15 bis 4, vorzugsweise 12 bis 4, Gewichts-% aufweist.

Bei der Vorkondensationsstufe ist darauf zu achten, dass die Reaktionsmischung nicht über 50°C erhitzt wird, da sonst Produkte entstehen, die sich nicht in reaktive, das heisst, für Formmassen, insbesondere Pressmassen geeignete Präpolymere umwandeln lassen. Während der Vorkondensationsstufe kann das Reaktionsgut ein- oder mehrmals zerkleinert bzw. umgranuliert werden.

Die sich anschliessende Zerkleinerung des Vorkondensates durch Granulieren oder Mahlen ist vorteilhaft so durchzuführen, dass die durchschnittliche Partikelgrösse des Granulats bzw. Mahlguts nicht kleiner als 2 mm Durchmesser beträgt, da bei zu grosser spezifischer Oberfläche des Granulats bzw. Mahlguts eine unerwünschte Carbonatisierung des Silikates durch das in der Luft enthaltene $CO_2$ eintritt und dadurch Produkte mit weniger vorteilhaften Eigenschaften erhalten werden. Gegebenenfalls wird bereits während der Vorkondensationsstufe das Reaktionsgemisch ein- oder mehrere Male zerkleinert bzw. umgranuliert.

Zur weiteren Kondensierung der Vorkondensate, die vorzugsweise bei Temperaturen von 80 bis 110°C, insbesondere im Temperaturbereich von 90 bis 100°C, vorgenommen wird, können die herkömmlichen Trockenschränke oder Umluftöfen benutzt werden.

Der Wassergehalt der einzelnen Reaktionsprodukte kann thermogravimetrisch an dem Reaktionsgemisch entnommenen Proben bestimmt werden.

Wie bereits erwähnt, stellen die neuen Präpolymeren wertvolle Pressmassen dar, die ungefüllt oder mit Füllstoffen versehen sich zu Formstoffen mit technisch wertvollen Werkstoffeigenschaften verarbeiten lassen. Bei Verwendung der erfindungsgemässen Präpolymeren als ungefüllte Pressmasse enthalten diese vorzugsweise einen Wassergehalt von 4 bis 8 Gewichts-%. Für gefüllte Pressmassen werden bevorzugt Präpolymere mit einem Wassergehalt von 8 bis 15 Gewichts-% eingesetzt.

# 0 001 091

Als Füllstoffe werden sowohl anorganische als auch organische Substanzen mit und ohne Verstärkungswirkung verwendet. Genannt seien als anorganische Füllstoffe ohne verstärkende Wirkung: gemahlene natürliche Mineralstoffe, wie Wollastonit, Speckstein, Talk, Quarzmehl, Glimmer, Kreidemehl, Schiefermehl, ungebrannter oder gebrannter Kaolin, Asbest, sowie technische Produkte, wie Zement, Glas oder Schlacke. Als verstärkende Füllstoffe können anorganische faserige Stoffe, wie Glas-, Asbest-, Bor- oder Kohlenstoffasern eingesetzt werden, die auch als Gewebe oder Matten vorliegen können. Da organische Füll- und Verstärkungsmaterialien, wie Holzmehl, Zellstoffe und die natürlichen oder synthetischen Fasern, wie Baumwolle, Polyamid-, Polyester- oder Polyacrylnitrilfasern, die Hitzebeständigkeit der Endprodukte ungünstig beeinflussen, werden sie nur zur Herstellung von Produkten verwendent, bei denen die Anforderung hinsichtlich Hitzebeständigkeit geringer ist. Den Pressmassen können auch Pigmente oder Farbstoffe zugegeben werden.

Der Anteil der Füll- bzw. Zusatzstoffe in gefüllten Pressmassen richtet sich nach dem jeweiligen Anwendungszweck der Endprodukte und kann bis zur dreifachen Menge des Präpolymers betragen. Die Herstellung der Pressmassenmischungen kann nach verschiedenen Methoden in an sich bekannter Weise erfolgen. Die Wahl des Mischverfahrens richtet sich vor allem nach den verwendeten Füllstoffen bzw. Verstärkungsmitteln. Die erfindungsgemässen Präpolymeren können mit den gemahlenen Füllstoffen oder Verstärkungsmitteln in einfacher Weise in einer geeigneten Mischvorrichtung trocken homogenisiert werden. Die Füll- oder Verstärkungsmittel können auch während des Kondensationsverfahrens zur Herstellung der Präpolymeren dem Reaktionsgemisch zugegeben werden. Die Füllstoffe können auch bereits während der Vorkondensationsstufe, gegebenenfalls bei der Herstellung der homogenisierten Mischung, eingesetzt werden.

Die erfindungsgemässen Präpolymeren, insbesondere deren Vorkondensate, eignen sich auch als Binde- bzw. Imprägnierungsmittel zur Herstellung von faserverstärkten Laminaten, indem man eine wässrige, das Präpolymer oder dessen Vorkondensat enthaltende Aufschlämmung auf das Trägermaterial aufbringt und bei Temperaturen bis zu 120°C solange trocknet, bis die imprägnierte Ware einen Wassergehalt von 15 bis 2 Gewichts-%, bezogen auf das imprägnierte Material, aufweist. Die auf diese Weise erhaltenen Prepregs sind zur Herstellung von Schichtpressstoffen geeignet.

## Beispiel 1

A) Herstellung von Präpolymeren

In einem Muldenkneter (Typ "Meili") von 10 Liter Inhalt werden vorgelegt:

3,30 kg 37 %-ige, wässrige Natriumsilikat-Lösung
(38° Bé, Molverhältnis $Na_2O/SiO_2 = 1:3,3$, pH = 11; technisches Produkt) und

5,32 kg Natriumsilikat-Pulver
(Glührückstand bei 900°C: 82 Gewichts-%)

und anschliessend während 10 Minuten bei einer Knetschaufelumlaufgeschwindigkeit von 45/68 Umdrehungen pro Minute zu einer thioxotropen Masse homogenisiert. Danas werden dem Mischgut weitere

3,40 kg Natriumsilikat-Lösung (wie oben),
2,00 kg Zinkoxid, ("Weissiegel") und
0,03 kg Pigment "Lichtgelb 8 G" (Bayer)

in etwa 10 Minuten unter ständigem Kneten zugegeben. Der Wassergehalt der Mischung beträgt 36,7 Gewichts-%.

Der Kneter wird geschlossen und das Reaktionsgemisch wird bei 25—30°C 15 Minuten weitergeknetet.

Das homogenisierte Knetgut wird danach auf Trockenblechen zu einer Schichtdicke von 20 mm ausgebreitet. Nach Stehenlassen währen 10· bis etwa 15 Stunden wird die zähtrockene Masse im "Werner Pfleiderer"-Passiersieb mit 3 mm-Einsatz granuliert. Das Granulat wird wieder auf Blechen verteilt und etwa 2 mal 15 Stunden lang mit Zwischengranulierung bei Raumtemperatur gehalten, wobei der Wassergehalt des Granulats auf 25—32 Gewichts-% sinkt. Nach Umschütteln wird dieses Produkt im Umluft-Trockenschrank 2—3 Stunden lang bei 90°C gehalten, bis der Wassergehalt auf etwa 20 Gewichts-% sinkt.

Nach wiederholtem Zerkleinern wird das Produkt bei 120°C Ofentemperatur weitere 1—2 Stunden lang behandelt bis der Wassergehalt auf 11 Gewichts-% herabgesetzt wird.

Ein Teil des Mahlguts wird bei einer Ofentemperatur von 120°C noch weiter getrocknet, bis es einen Wassergehalt von 5 Gewichts-% aufweist.

B) Verwendung der Präpolymeren

1. Das gemäss oben erhaltene Präpolymer mit einem Wassergehalt von 5 Gewichts-% wird nach Hinzufügen von 1,0 Gewichts-% "OP—Wachs" (modifiziertes Montanwachs von BASF) und nach Mahlen in einer Stiftmühle direkt als Pressmasse verarbeitet. Das Verpressen erfolgt in den üblichen, oberflächenvergüteten Stahlformen bei 800—1000 kg/cm² Druck und bei 250—260°C. Die Prüfkörper nach DIN 53 470 von 10 mm Dicke erfordern etwa 5 Minuten Presszeit und weisen hohe Festigkeiten auf.

2. In einem Trocken-Fluid-Mischer (Typ "Papenmeier") von 20 Liter Inhalt werden 3,30 kg des oben erhaltenen präpolymers mit einem Wassergehalt von 11 Gewichts-% und

4

**0 001 091**

3,30 kg Calciumsilikat (gemahlenes Wollastonit "P 1" von Cabot Corp., USA)
eindosiert und 2 Minuten vermischt. Danach werden weitere
3,30 kg des Präpolymeren mit 11 Gewichts-% Wassergehalt und
0,02 kg gemahlenes Zinkstearat
eingegeben und 5 Minuten lang homogenisiert. Die erhaltene Pressmasse wird als Pulver bei
250—260°C wie in Beispiel B1.) zu Formstücken verpresst.

Die Presszeit zur Herstellung von Prüfkörpern nach DIN 53 470 (10 mm Dicke) beträgt 5 Minuten.
Die Prüfkörper weisen folgende Eigenschaften auf:

| | |
|---|---|
| Spezifisches Gewicht | 2,41 g/cm³ |
| Druckfestigkeit (DIN[+)] 53 454) | 171 N/mm² |
| Kugeldruckhärte (VDE[++)] 0304) | 295 N/mm² |
| Schlagbiegefestigkeit (VSM[+++)] 77 105) | 0,160 N.cm/mm² |
| Linearer Wärmeausdehnungskoeffizient (VDE 0304) bei 25°—150°C | $6,5.10^{-6}$ (Grad $^{-1}$) |
| Brennbarkeit (UL[++++]94) | VO |
| Lichtbeständigkeit (Xenotest "Hanau 150") | >2000 Stunden |

[+)] DIN = Deutsche Industrie-Norm
[++)] VDE = Verein Deutscher Elektrotechniker
[+++)] VSM = Verein Schweizer Maschinenindustrieller
[++++)] UL = Underwriter's Laboratories

3. In einer 30 Liter/Kugelmühle werden
5,00 kg des oben erhaltenen Präpolymers mit einem Wassergehalt von 11 Gewichts-%,
4,00 kg Calciumsilikat (gemahlenes Wollastonit "P 1"),
1,00 kg Talk
(Glührückstand bei 850°C: 95.7 Gewichts-%) und
0,01 kg gemahlenes Zinkstearat
vorgelegt und 6—8 Stunden lang homogenisiert.

Die erhaltene Pressmasse wird auf die im Beispiel B 1.) beschriebene Weise zu Formkörpern
verpresst.

Die Prüfkörper weisen folgende Eigenschaften auf:

| | |
|---|---|
| Spezifisches Gewicht | 2,44 g/cm³ |
| Druckfestigkeit (DIN 53 454) | 150 N/mm² |
| Kugeldruckhärte (VDE 0304) | 162 N/mm² |
| Schlagbiegefestigkeit (VSM 77105) | 0,170 N.cm/cm² |
| Brennbarkeit (UL 94) | VO |
| Lichtbeständigkeit (Xenotest) | >2000 Stunden |

4. In einen Mischer von 10 Liter Inhalt werden folgende Materialien eingegeben:
2,0 kg des oben erhaltenen Präpolymers mit einem Wassergehalt von 11 Gewichts-%,
2,0 kg Asbestfasern
(gewaschene, eisenfreie Qualität, 3—10 mm)
1,0 kg Kupferspäne
(Dimension 0,6 × 1,5 × 4,0—12,0 mm)
und anschliessend 30 Minuten lang homogenisiert.

Der erhaltene Formstoff wird in auf 300°C beheizten Stahlformen zu Formkörpern der Dimension
45 × 30 × 15 mm verpresst, wobei die Presszeit etwa 1—2 Minuten pro 1 mm Formstückdicke
beträgt. Die erhaltenen Formkörper zeichnen sich durch gute mechanische Werte und hohe Abriebfestigkeit aus.

5. Auf einer Kalandrieranlage werden Steinwolle-Fasern von 3—10 mm Länge mit dem gemäss
Beispiel 1 frisch hergestellten Produkt mit einem Wassergehalt von grösser als 35 Gewichts-% imprägniert.

**0001091**

Die Imprägnierung wird so eingestellt, dass das Verhältnis von Vorkondensat/Steinwolle im Bereich von 1:3 bis 1:2 zu liegen kommt.

Das imprägnierte Material wird direkt auf das Transportband eines Tunnelofens geführt. Die Ofenzonen werden auf 90, 110 und 130°C temperiert. Die Durchlaufzeit wird so geregelt, dass ein Produkt mit 10—15 Gewichts-% Wassergehalt entsteht. Dieses Produkt wird in Stahlformen bei 200°C und einem Druck von 200 kg/cm² zu Formkörpern der Dimension 150 × 70 × 10 mm verpresst.

Die erhaltenen Presskörper zeichnen sich durch gute Festigkeiten und Wärmeisolierung aus.

6. Das gemäss Beispiel 1 erhaltene Vorkondensat mit einem Wassergehalt von 20 Gewichtsprozent wird in doppelter Menge Wasser mittels eines Rührwerkes aufgeschlämmt.

In einem Turm von 2,0 Meter Höhe und 60 cm Durchmesser werden Glasfasermatten von unten nach oben durchgezogen, die zuvor in einer Kammer mit der Vorkondensatsuspension aus 6 Düsen besprüht wurden, wobei eine Imprägnierung von 10 Gewichts-%, bezogen auf die trockkene Menge des Imprägnierungsmittels, erhalten wird. Der Turm wird von oben mit auf 200°C vorgeheizter Luft durchströmt, und die Durchlaufzeit wird so eingestellt, dass die imprägnierten Matten einen Wassergehalt von 2 bis 5 Gewichtsprozent aufweisen.

Die imprägnierten Matten werden in einer teflonisierten Aluminiumform bei 200—220°C und einem Druck von 20—50 kg/cm² zu Formkörpern der Dimension 60 × 30 × mm verpresst.

Die erhaltenen Formkörper zeichnen sich durch hohe Wärmebeständigkeit, gute Isolationsfähigkeit und inhärente Flammfestigkeit aus.

Beispiel 2

A) Herstellung der Präpolymeren

In einem Muldenkneter (Typ "Meili") von 20 Liter Inhalt werden unter ständigem Kneten folgende Substanzen in etwa 10 Minuten nacheinander eindosiert:

4,66 kg 37%-ige, wässrige Natriumsilikat-Lösung
(38° Bé, Molverhältnis $Na_2O/SiO_2 = 1:3,3$, pH = 11; technisches Produkt),

4,32 kg Natriumsilikat-Pulver
(Glührückstand bei 900°C = 82 Gewichts-%) und

0,80 kg Kaliumsilikat-Pulver
(Glührückstand bei 900°C = 99 Gewichts-%)

Nach Bildung einer homogenen Masse werden weitere

2,00 kg Natriumsilikat-Lösung (wie oben),

4,00 kg Zinkoxid, ("Rotsiegel") portionsweise und

0,05 kg Pigment "Lichtgelb 6 R" (Bayer)

unter ständigem Kneten zugegeben. Der Wassergehalt der Mischung beträgt 31,7 Gewichts-%.

Die Apparatur wird geschlossen und das Reaktionsgemisch wird bei 25—30°C 10 Minuten lang weiter homogenisiert.

Das Knetgut wird dann auf Trockenblechen in Schichtdicke von 20 mm ausgebreitet. Nach Stehenlassen von etwa 15 Stunden wird die zähtrockene Masse in einem Passiersieb mit 5 mm-Einsatz granuliert. Das Granulat wird wieder auf Blechen verteilt und ca. 20 Stunden lang bei Raumtemperatur gehalten, wobei der Wassergehalt des Granulates auf 20—25 Gewichts-% sinkt.

Nach Durchgang durch eine Stiftmühle ("Alpine RO 10/6") wird das Mahlgut im Umluft-Trockenschrank 3—5 Stunden lang bei 90°C gehalten, bis der Wassergehalt auf etwa 12 Gewichts-% sinkt.

Ein Teil dieses gehalten Präpolymers wird im Umluftofen bei 100°C weitergetrocknet, bis der Wassergehalt auf 7—8 Gewichts-% weiter herabgesetzt wird.

B) Verwendung der Präpolymeren

1. In einem Spiralmischer (Typ "Nauda") werden

2,0 kg des oben erhaltenen Präpolymers mit einem Wassergehalt von etwa 12 Gewichts-% und ein Gemisch aus

0,7 kg Calciumsilikat (gemahlenes "Wollastonit P 1")

0,3 kg Talk
(Glührückstand bei 850°C: 95,7 Gewichts-%) und

0,01 kg "OP-Wachs" (modifiziertes Montanwachs der BASF)

eindosiert und homogenisiert.

Das Gemisch wird direct auf einen Kompaktor (Typ "Hutt") geführt. Das kompaktierte Produkt wird durch Granulieren und anschliessendem Aussieben des Staubanteils in ein Pressmassen-Granulat übergeführt.

Die Pressmasse wird bei 240—250°C und einem Druck von 1000—1200 kg/cm² zu Formkörpem gemäss DIN 53 470 verpresst.

Die erhaltenen Formkörper weisen folgenden Eigenschaften auf:

| | |
|---|---|
| Druckfestigkeit (DIN 53 454) | 170 N/mm² |
| Kugeldruckhärte (VDE 0304) | 202 N/mm² |
| Schlagbiegefestigkeit (VSM 77 105) | 0,130 N.cm/mm² |
| Brennbarkeit (UL 94) | 5V |
| Lichtbeständigkeit (Xenotest) | >2000 Stunden |

2. Das gemäss oben erhalten Präpolymer mit einem Wassergehalt von 7 bis 8 Gewichts-% wird nach Hinzufügen vom 1 Gewichts-% "OP-Wachs" auf einer Stiftmühle gemahlen. Das Mahlgut wird ohne Zusatz von Füllstoffen als Pressmasse verarbeitet.

Das Herstellen von Presskörpern nach DIN 53 470 erfolgt bei 240°C und einem Druck von 800—1000 kg/cm².

Die erhaltenen Presslinge weisen hohe Festigkeiten auf.

### Beispiel 3

A) Herstellung der Präpolymeren

In einem Muldenkneter von 5 Liter Inhalt werden folgende Substanzen vorgelegt:

1,15 kg 37%-ige, wässrige Natriumsilikat-Lösung
(38° Bé, Molverhältnis $Na_2O/SiO_2$ = 1:3,3, pH = 11; technisches Produkt) und

0,70 kg Natriumsilikat-Pulver
(Glührückstand bei 900°C: 82 Gewichts-%).

Nach Bildung einer homogenen Masse werden

0,08 kg Emulgator "Mersolat W" (Bayer),

0,40 kg Zinkoxid ("Weissiegel")

0,02 kg Pigment "Cadmiumgelb"

zugegeben und in ca. 10 Minuten gründlich vermischt.

Danach werden als Füllstoff

0,83 kg Steinwolle ("Egi" der Rheinstahl-Werke)
mit

1,00 kg Natriumsilikat-Lösung (wie oben)

eingeknetet und homogenisiert. Der Wassergehalt der Mischung beträgt 38,3 Gewichts-%.

Das Knetgut wird auf Trockenblechen in Schichtdicke von 30 mm ausgebreitet. Nach Stehenlassen von 5 bis 8 Stunden wird das Material im Passiersiebe mit 10 mm-Einsatz granuliert.

Das Granulat wird wieder auf Blechen verteilt und ca. 15 Stunden lang bei Raumtemperatur gehalten. Der Wassergehalt des erhaltenen Produktes beträgt 25—28 Gewichts-%.

Nach Umgranulieren wird das Produkt im Umluft-Trockenschrank 3—5 Stunden lang bei 90°C gehalten, bis der Wassergehalt auf ca. 15 Gewichts-% sinkt. Nach Weitertrocknen auf einem auf 120°C beheizten Walzenstuhl wird ein Produkt mit etwa 8 Gewichts-% Wassergehalt gewonnen.

B) Verwendung der Präpolymeren

Das gemäss oben erhaltene Präpolymer mit einem Wassergehalt von 8 Gewichts-% wird nach Versetzen mit 2,5 Gewichts-% Glycerinmonostearat als Formtrennmittel in einem Brecher mit 5 mm-Einsatz gemahlen. Das Mahlgut wird direkt als Pressmasse verwendet und bei 270°C und einem Druck von 600—700 kg/cm² zu Formkörpern der Dimension 60 × 30 × 10 mm verpresst.

Die Formkörper weisen gute Festigkeiten, Hitzebeständigkeit, Unbrennbarkeit und gute Lichtbeständigkeit auf.

### Beispiel 4

A) Herstellung von Präpolymeren

In einem Muldenkneter von 20 Liter Inhalt werden unter ständigem Kneten folgende Materialien vorgelegt:

2,36 kg 37%-ige, wässrige Natriumsilikat-Lösung
(38° Bé, Molverhältnis $Na_2O/SiO_2$ = 1:3,3, pH = 11; technisches Produkt) und

1,15 kg Natriumsilikat-Pulver
(Glührückstand bei 900°C: 82 Gewichts-%).

Nach Bildung einer homogenen Masse werden weitere

2,00 kg Natriumsilikat-Lösung (wie oben) mit

2,00 kg Zinkoxid ("Weissiegel") und

0,03 kg Pigment "Lichtgrün 5 G" (Bayer)

in etwa 5 Minuten zugegeben und weitere 10 Minuten lang homogenisiert.

Danach werden

6,20 kg Calciumsilikat (gemahlenes Wollastonit "P 1" von Cabot Corp., USA) zusammen mit 5,00 kg Natriumsilikat-Lösung (37%ig wie oben) in ca. 15 Minuten zudosiert. Der Wassergehalt der homogenisierten Mischung beträgt 33,0 Gewichts-%.

Das Gemisch wird dann bei 25—30°C noch 25 Minuten weitergeknetet.

Das homogenisierte Knetgut wird auf Trockenblechen in Schichtdicke von 20 mm entleert. Nach Stehenlassen von etwa 20 Stunden wird die zähtrockene Masse im Passiersieb mit 5 mm-Einsatz granuliert. Wassergehalt des Granulates 25—28 Gewichts-%.

Das Granulat wird auf das Förderband eines Tunnelofens gestreut, der 3 Zonen, in denen die Temperaturen von 90°, 120° und 150° herrschen, besitzt. Die Längen der Zonen stehen zueinander im Verhälnis von 2:1:1.

Nun wird die Durchlaufgeschwindigkeit so eingestellt, dass am Ofenende ein Produkt entnommen werden kann, dessen Wassergehalt zwischen 4—8 Gewichts-% variiert, während das Produkt aus der mittleren Zone einen solchen von ca. 12—18 Gewichts-% aufweist.

B) Verwendung der Präpolymeren

Das gemäss oben erhaltene Präpolymer mit einem Wassergehalt von 4—8 Gewichts-% wird nach Hinzufügen von 1,0 Gewichts-% Zinkstearat in einer Stiftmühle gemahlen und direkt als Pressmasse verarbeitet. Das Verpressen erfolgt bei 800—1000 kg/cm² Druck und 250°C. Die nach DIN 53 470 hergestellten Prüfkörper weisen folgende Eigenschaften auf:

| | |
|---|---|
| Spezifisches Gewicht | 2,65 g/cm³ |
| Druckfestigkeit (DIN 53 454) | 365 N/mm² |
| Kugeldruckhärte (VDE 0304) | 420 N/mm² |
| Schlagbiegefestigkeit (VSM 77 107) | 0,210 N.cm/mm² |
| Biegefestigkeit (VSM 77 103) | 100 N/mm² |
| Linearer Wärmeausdehnungskoeffizient (VDE 0304) bei 25—150°C | $8,5$—$10^{-6}$ Grad$^{-1}$ |
| Brennbarkeit (UL 94) | 5V |
| Lichtbeständigkeit (Xenotest) | >2000 Stunden |

Beispiel 5

A) Herstellung von Präpolymeren

In einem Muldenkneter von 20 Liter Inhalt werden unter ständigem Kneten folgende Materialien vorgelegt:

1,25 kg Natriumsilikat, Pulver
(Glührückstand bei 900°C: 82 Gewichts-%) und
1,45 kg deionisiertes Wasser.

Nach 15 Minuten Aufschlämmen werden allmählich weitere
0,85 kg Natriumsilikat-Pulver zugefügt.

Nach Bildung einer viskosen Masse werden
0,70 kg Zinkoxid ("Rotsiegel") und
0,02 kg Pigment "Lichtblau 2R" (Bayer)
in etwa 10 Minuten zugestreut.

Nach gleichmässiger Verteilung dieser Substanzen werden weitere
1,45 kg deionisiertes Wasser und
0,85 kg Natriumsilikat-Pulver zugesetzt.

In die in etwa 10 Minuten entstehende Paste werden
3,44 kg Calciumsilikat (gemahlenes Wollastonit "P 1" von Cabot Corp. USA)
in 10 Minuten zudosiert und in weiteren 20 Minuten eingeknetet, wobei die Temperatur zwischen 30—45°C gehalten wird.

Das Knetgut wird auf Trockenblechen in Schichtdicke von 20 mm entleert. Nach Stehenlassen von etwa 15 Stunden wird die zähtrockene Masse im Passiersieb mit 5 mm Einsatz granuliert; Wassergehalt das Granulates 24—26 Gewichts-%.

Das Granulat wird auf das Förderband eines Tunnelofens gestreut, der 3 Zonen, in denen die Temperaturen von 90°, 110° und 140°C herrschen, besitzt. Die Längen der Zonen stehen zueinander im Verhältnis von 2:1:1.

Nun wird die Durchlaufgeschwindigkeit so eingestellt, dass am Ofenende ein Produkt entnommen werden kann, dessen Wassergehalt zwischen 4—6 Gewichts-% variiert, während das Produkt aus der mittleren Zone einen solchen von ca. 10—16 Gewichts-% aufweist.

B) Verwendung von Präpolymeren

Das gemäss oben erhaltene Präpolymer mit einem Wassergehalt von 4—6 Gewichts-% wird nach Hinzufügen von 1,0 Gewichts-% Zinkstearat in einer Stiftmühle gemahlen und direkt als Pressmasse verarbeitet. Das Verpressen erfolgt bei 800 kg/cm² Druck und 250°C. Die hergestellten Formkörper (60 x 30 x 10 cm) weisen eine hohe Härte, gute Schlagbiegefestigkeit, absolute Unbrennbarkeit und hohe Hitze- und Lichtbeständigkeiten auf. Ihr spezifisches Gewicht beträgt 2,60 g/cm³.

Beispiel 6

A) Herstellung von Präpolymeren

In einem Muldenkneter von 10 Liter Inhalt werden unter ständigem Kneten folgende Materialien vorgelegt:

2,30 kg 37 %-ige, wässrige Natriumsilikat-Lösung
(38° Bé, Molverhältnis $Na_2O/SiO_2 = 1:3,3$, pH = 11; technisches Produkt) und
0,66 kg Natriumsilikat-Pulver
(Glührückstand bei 900°C: 82 Gewichts-%).
Nach Bildung einer homogenen Masse werden weitere

1,50 kg Natriumsilikat-Lösung (wie oben) mit
1,10 kg Zirkoniumoxid
in etwa 10 Minuten zugegeben und weitere 10 Minuten lang homogenisiert.
Danach werden

3,50 kg Calciumsilikat
(gemahlenes Wollastonit "P 1" von Cabot Corp., USA) zusammen mit
1,50 kg Natriumsilikat-Lösung (37%-ig wie oben)
in ca. 15 Minuten zudosiert. Der Wassergehalt der Formulierung beträgt etwa 32,5 Gewichts-%.
Das Gemisch wird dann bei 25—30°C noch 25 Minuten weitergeknetet.

Das homogenisierte Knetgut wird auf Trockenblechen in Schichtdicke von 20 mm entleert. Nach Stehenlassen von etwa 18 Stunden wird die zähtrockene Masse im Passiersieb mit 5 mm-Einsatz granuliert. Wassergehalt des Granulates: 15 Gewichts-%.

Das Granulat wird auf das Förderband eines Tunnelofens gestreut, der 3 Zonen, in denen die Temperaturen von 90°, 120° und 150°C herrschen, besitzt. Die Längen der Zonen stehen zueinander im Verhältnis von 2:1:1.

Nun wird die Durchlaufgeschwindigkeit so eingestellt, dass am Ofenende ein Produkt entnommen werden kann, dessen Wassergehalt zwischen 7—8 Gewichts-% variiert, während das Produkt aus der mittleren Zone einen solchen von etwa 10 Gewichts-% aufweist.

B) Verwendung der Präpolymeren

Das gemäss oben erhaltene Präpolymer mit einem Wassergehalt von 7,8 Gewichts-% wird nach Hinzufügen von 1,0 Gewichts-% Zinkstearat in einer Stiftmühle und anschliessend in einer Kugelmühle gemahlen und direkt als Pressmasse verarbeitet. Das Verpressen erfolgt bei 800—1000 kg/cm² Druck und 250°C. Die nach DIN 53 470 hergestellten Prüfkörper weisen folgende Eigenschaften auf:

| | |
|---|---|
| Spezifisches Gewicht | 2,23 g/cm³ |
| Druckfestigkeit (DIN 53 454) | 86 N/mm² |
| Kugeldruckhärte (VDE 0304) | 273 N/mm² |
| Schlagbiegefestigkeit (VSM 77 107) | 0,12 N.cm/mm² |
| Biegefestigkeit (VSM 77 103) | 44 N/mm² |
| Brennbarkeit (UL 94) | 5V |
| Lichtbeständigkeit (Xenotest) | >2000 Stunden |

Beispiel 7

A) Herstellung von Präpolymeren

In einem Muldenkneter von 10 Liter Inhalt werden unter ständigem Kneten folgende Materialien vorgelegt:
2,20 kg 37 %-ige, wässrige Natriumsilikat-Lösung
(38° Bé, Molverhältnis $Na_2O/SiO_2 = 1:3,3$ pH = 11) und
0,64 kg Natriumsilikat-Pulver

9

(Glührückstand bei 900°C: 82 Gewichts-%).

Nach Bildung einer homogenen Masse werden weitere

1,50 kg Natriumsilikat-Lösung (wie oben) mit

0,42 kg Magnesiumoxid, "Merck Nr. 5866"

in etwa 15 Minuten zugegeben und weitere 10 Minuten lang homogenisiert.

Danach werden

3,45 kg Calciumsilikat

(gemahlenes Wollastonit "P 1" von Cabot Corp., USA) zusammen mit

1,50 kg Natriumsilikat-Lösung (37 %ig wie oben)

in ca. 15 Minuten zudosiert. Der Wassergehalt der Formulierung beträgt etwa 33,0 Gewichts-%.

Das Gemisch wird dann bei 25—30°C noch 25 Minuten weitergeknetet.

Das homogenisierte Knetgut wird auf Trockenblechen in Schichtdicke von 20 mm entleert. Nach Stehenlassen von etwa 30 Stunden wird die zähtrockene Masse im Passiersieb mit 5 mm-Einsatz granuliert. Wassergehalt das Granulates: 20 Gewichts-%.

Das Granulat wird auf das Förderband eines Tunnelofens gestreut, der 3 Zonen, in denen die Temperaturen von 90°, 120° und 150°C herrschen, besitzt. Die Längen der Zonen stehen zueinander im Verhältnis von 2:1:1.

Nun wird die Durchlaufgeschwindigkeit so eingestellt, dass am Ofenende ein Produkt entnommen werden kann, dessen Wassergehalt zwischen 8—10 Gewichts-% variiert, während das Produkt aus der mittleren Zone einen solchen von ca. 14 Gewichts-% aufweist.

B) Verwendung der Präpolymeren

Das gemäss oben erhaltene Präpolymer mit einem Wassergehalt von 9,5 Gewichts-% wird nach Hinzufügen von 1,0 Gewichts-% Zinkstearat in einer Stiftmühle gemahlen und direkt als Pressmasse verarbeitet. Das Verpressen erfolgt bei 800—1000 kg/cm² Druck und 250°C. Die nach DIN 53 470 hergestellten Prüfkörper weisen folgende Eigenschaften auf:

| | |
|---|---|
| Spezifisches Gewicht | 2,17 g/cm³ |
| Druckfestigkeit (DIN 53 454) | 65 N/mm² |
| Kugeldruckhärte (VDE 0304) | 235 N/mm² |
| Schlagbiegefestigkeit (VSM 77 107) | 0,07 N.cm/mm² |
| Biegefestigkeit (VSM 77 103) | 23 N/mm² |
| Brennbarkeit (UL 94) | 5V |

Beispiel 8

A) Herstellung von Präpolymeren

In einem Muldenkneter von 10 Liter Inhalt werden unter ständigem Kneten folgende Materialien vorgelegt:

2,20 kg 37%-ige, wässrige Natriumsilikat-Lösung

(38° Bé, Molverhältnis $Na_2O/SiO_2 = 1:3,3$, pH = 11) und

0,64 kg Natriumsilikat-Pulver

(Glührückstand bei 900°C: 82 Gewichts-%).

Nach Bildung einer homogenen Masse werden weitere

1,50 kg Natriumsilikat-Lösung (wie oben) mit

0,70 kg Eisen(III)-oxid

in etwa 10 Minuten zugegeben und weitere 10 Minuten lang homogenisiert.

Danach werden

3,45 kg Calciumsilikat

(gemahlenes Wollastonit "P 1" von Cabot Corp., USA) zusammen mit

1,50 kg Natriumsilikat-Lösung (37 %ig wie oben)

in ca. 15 Minuten zudosiert. Der Wassergehalt der Formulierung beträgt etwa 34,0 Gewichts-%.

Das Gemisch wird dann bei 25—30°C noch 25 Minuten weitergeknetet.

Das homogenisierte Knetgut wird auf Trockenblechen in Schichtdicke von 20 mm entleert. Nach Stehenlassen von etwa 20 Stunden wird die zähtrockene Masse im Passiersieb mit 5 mm-Einsatz granuliert. Wassergehalt des Granulates: 16 Gewichts-%.

Das Granulat wird auf das Förderband eines Tunnelofens gestreut, der 3 Zonen, in denen die Temperaturen von 90°, 120° und 150°C herrschen, besitzt. Die Längen der Zonen stehen zueinander im Verhältnis von 2:1:1.

Nun wird die Durchlaufgeschwindigkeit so eingestellt, dass am Ofenende ein Produkt entnommen werden kann, dessen Wassergehalt zwischen 7—8 Gewichts-% variiert, während das Produkt aus der

# 0 001 091

mittleren Zone einen solchen von ca. 10 Gewichts-% aufweist.

B) Verwendung der Präpolymeren

Das gemäss oben erhaltene Präpolymer mit einem Wassergehalt von 7,5 Gewichts-% wird nach Hinzufügen von 1,0 Gewichts-% Zinkstearat in einer Stiftmühle gemahlen und direkt als Pressmasse verarbeitet. Das Verpressen erfolgt bei 800—1000 kg/cm² Druck und 250°C. Die nach DIN 53 470 hergestellten Prüfkörper weisen folgende Eigenschaften auf:

| | |
|---|---|
| Spezifisches Gewicht | 2,55 g/cm³ |
| Druckfestigkeit (DIN 53 454) | 300 N/mm² |
| Kugeldruckhärte (VDE 0304) | 380 N/mm² |
| Schlagbiegefestigkeit (VSM 77 107) | 0,16 N.cm/mm² |
| Biegefestigkeit (VSM 77 103) | 103 N/mm² |
| Brennbarkeit (UL 94) | 5V |
| Lichtbeständigkeit (Xenotest) | >2000 Stunden |

## Beispiel 9

A) Herstellung von Präpolymeren

In einem Muldenkneter von 10 Liter Inhalt werden unter ständigem Kneten folgende Materialien vorgelegt:

2,70 kg 37 %-ige, wässrige Natriumsilikat-Lösung
    (38° Bé, Molverhältnis $Na_2O/SiO_2$ = 1:3,3, pH = 11) und
0,70 kg Natriumsilikat-Pulver
    (Glührückstand bei 900°C: 82 Gewichts-%).
    Nach Bildung einer homogenen Masse werden weitere
1,50 kg Natriumsilikat-Lösung (wie oben) mit
1,75 kg Eisenschlamm; getrocknet (Zusammensetzung ~ $Fe_3O_4$; Wassergehalt ≃ 6 Gewichts-%.)
in etwa 10 Minuten zugegeben und weitere 10 Minuten lang homogenisiert.
    Danach werden
3,80 kg Calciumsilikat
    (gemahlenes Wollastonit "P 1" von Cabot Corp., USA) zusammen mit
1,50 kg Natriumsilikat-Lösung (37 %ig wie oben)
in ca. 15 Minuten zudosiert. Der Wassergehalt der Fomulierung beträgt etwa 31,0 Gewichts-%.
    Das Gemisch wird dann bei 25—30°C noch 25 Minuten wietergeknetet.
    Das homogenisierte Knetgut wird auf Trockenblechen in Schichtdicke von 20 mm entleert. Nach Stehenlassen von etwa 22 Stunden wird die zähtrockene Masse im Passiersieb mit 5 mm-Einsatz granuliert. Wassergehalt des Granulates 20 Gewichts-%.
    Das Granulat wird auf das Förderband eines Tunnelofens gestreut, der 3 Zonen, in denen die Temperaturen von 90°, 120° und 150°C herrschen, besitzt. Die Längen der Zonen stehen zueinander im Verhältnis von 2:1:1.
    Nun wird die Durchlaufgeschwindigkeit so eingestellt, dass am Ofenende ein Produkt entnommen werden kann, dessen Wassergehalt zwischen 7—10 Gewichts-% variiert, während das Produkt aus der mittleren Zone einen solche von ca. 17 Gewichts-% aufweist.

B) Verwendung der Präpolymeren

Das gemäss oben erhaltene Präpolymer mit einem Wassergehalt von 8,0 Gewichts-% wird nach Hinzufügen von 1,0 Gewichts-% Zinkstearat in einer Stiftmühle gemahlen und direkt als Pressmasse verarbeitet. Das Verpressen erfolgt bei 800—1000 kg/cm² Druck und 250°C. Die erhaltenen Formkörper weisen ebenfalls gute mechanische Festigkeiten auf.

## Patentansprüche

1. Präpolymere aus Alkali- und/oder Erdalkalisilikaten und Metalloxiden, dadurch gekennzeichnet, dass sie erhalten werden, indem man eine Mischung aus festen und in Wasser gelösten Alkali- und/oder Erdalkalisilikaten, gegebenenfalls unter Zugabe von Wasser, und aus zwei- bis vierwertigen Metalloxiden, wobei in der Mischung das Verhältnis von Metalloxid zu Silikat 1:1 bis 1:9 Gewichtsteile Trockensubstanz beträgt und wobei die nicht über 30°C homogenisierte Mischung einen Wassergehalt von 10 bis 50 Gewichts-%, bezogen auf die gesamte Mischungsmenge, aufweist, im Temperaturbereich von 10 bis 50°C solange reagieren lässt, bis der Wassergehalt der Mischung sich um 0,1 bis

11

25 Gewichts-% verringert und ein zur Zerkleinerung genügend zähtrockenes Produkt erhalten wird, dieses zerkleinert und anschliessend bei Temperaturen bis zu 120°C so lange erhitzt, bis das erhaltene Präpolymer einen Wassergehalt von 20 bis 2 Gewichts-% aufweist.

2. Präpolymere gemäss Anspruch 1 aus Alkali- und/oder Erdalkalisilikaten und Metalloxiden, dadurch gekennzeichnet, dass sie erhalten werden, indem man eine homogenisierte Mischung aus festen und in Wasser gelösten Alkali- und/oder Erdalkalisilikaten und zwei- bis vierwertigen Metalloxiden, wobei in der Mischung der Anteil der in Wasser gelösten Silikatmenge weniger als 33 Gewichts-%, bezogen auf die gesamte trockene Silikatmenge, und das Verhältnis von Metalloxid zu Silikat 1:1 bis 1:6 Gewichtsteile Trockensubstanz beträgt und wobei die nicht über 3°C homogenisierte Mischung einen Wassergehalt von 25 bis 50 Gewichts-%, bezogen auf die gesamte Mischungsmenge, aufweist, im Temperaturbereich von 20 bis 50°C solange reagieren lässt, bis der Wassergehalt der Mischung sich um 0,1 bis 20 Gewichts-% verringert und ein zur Zerkleinerung genügend zähtrockenes Produkt erhalten wird, dieses granuliert oder mahlt und anschliessend bei Temperaturen bis zu 120°C so lange erhitzt, bis das erhaltene Präpolymer einen Wassergehalt von 15 bis 4 Gewichts-% aufweist.

3. Präpolymere gemäss Anspruch 1 oder 2 aus einer homogenisierten Mischung aus festen hydratisierten Alkali- und Erdalkalisilikaten und in Wasser gelösten Alkalisilikaten und zweiwertigen Metalloxiden, wobei die homogenisierte Mischung einen Wassergehalt von 30 bis 45 Gewichts-% aufweist.

4. Präpolymere gemäss Anspruch 1 oder 2 aus einer homogenisierten Mischung aus festen hydratisierten und in Wasser gelösten Alkalisilikaten und Zinkoxid.

5. Präpolymere gemäss Anspruch 4 aus einer homogenisierten Mischung aus festem und in Wasser gelöstem Natriumsilikat und Zinkoxid.

6. Verfahren zur Herstellung von Präpolymeren aus Alkali- und/oder Erdalkalisilikaten und Metalloxiden, dadurch gekennzeichnet, dass man eine Mischung aus festen und in Wasser gelösten Alkali- und/oder Erdalkalisilikaten, gegebenenfalls unter Zugabe von Wasser, und aus zwei- bis vierwertigen Metalloxiden, wobei in der Mischung das Verhältinis von Metalloxid zu Silikat 1:1 bis 1:9 Gewichtsteile Trockensubstanz beträgt und wobei die nicht über 30°C homogenisierte Mischung einen Wassergehalt von 10 bis 50 Gewichts-%, bezogen auf die gesamte Mischungsmenge, aufweist, im Temperaturbereich von 10 bis 50°C solang reagieren lässt, bis der Wassergehalt der Mischung sich um 0,1 bis 25 Gewichts-% verringert und ein zur Zerkleinerung genügend zähtrockenes Produkt erhalten wird, dieses zerkleinert und anschliessend bei Temperaturen bis zu 120°C so lange erhitzt, bis das erhaltene Präpolymer einen Wassergehalt von 20 bis 2 Gewichts-% aufweist.

7. Verfahren gemäss Anspruch 6, dadurch gekennzeichnet, dass man eine homogenisierte Mischung aus festen und in Wasser gelösten Alkali- und Erdalkalisilikaten und zwei- bis vierwertigen Metalloxiden, wobei in der Mischung der Anteil der in Wasser gelösten Silikatmenge weniger als 33 Gewichts-%, bezogen auf die geamte trockene Silikatmenge, und das Verhältnis von Metalloxid zu Silikat 1:1 bis 1:6 Gewichtsteile Trockensubstanz beträgt und wobei die nicht über 30°C homogenisierte Mischung einen Wassergehalt von 25 bis 50 Gewichts-%, bezogen auf die gesamte Mischungsmenge, aufweist, im Temperaturbereich von 20 bis 50°C solange reagieren lässt, bis der Wassergehalt der Mischung sich um 0,1 bis 20 Gewichts-% verringert und ein zur Zerkleinerung genügend zähtrockenes Produkt erhalten wird, dieses granuliert oder mahlt und anschliessend bei Temperaturen bis zu 120°C so lange erhitzt, bis das erhaltene Präpolymer einen Wassergehalt von 15 bis 4 Gewichts-% aufweist.

8. Verfahren gemäss Anspruch 6, dadurch gekennzeichnet, dass man eine homogenisierte Mischung aus festen hydratisierten Alkali- und Erdalkalisilikaten und in Wasser gelösten Alkalisilikaten und zweiwertigen Metalloxiden, wobei die homogenisierte Mischung einen Wassergehalt von 30 bis 45 Gewichts-% aufweist, verwendent.

9. Verwendung der Präpolymeren gemäss Anspruch 1 als ungefüllte oder mit Füll- und/oder Verstärkungsmitteln versehene Formmasse, vorzugsweise Pressmasse.

10. Verwendung der Präpolymeren gemäss Anspruch 1 für die Herstellung von verpressbaren Laminaten oder von Isolierplatten.

## Claims

1. A prepolymer of alkali metal silicates and/or alkaline earth metal silicates and metal oxides, which is obtained by a method wherein a mixture of solid alkali metal silicates and/or alkaline earth metal silicates, and aqueous solution of such silicates, with or without addition of water, and of divalent to tetravalent metal oxides, the ratio of metal oxide to silicate in the mixture being from 1:1 to 1:9, expressed in parts by weight of solids, and the mixture, homogenised not above 30°C and having a water content of from 10 to 50% by weight, based on the total amount of mixture, is allowed to react in the temperature range of 10 to 50°C until the water content of the mixture has decreased by from 0.1 to 25% by weight and a product which is sufficiently tough and dry to permit comminution is obtained, and this product is comminuted and then heated at temperatures of up to 120°C until the prepolymer obtained has a water content of from 20 to 2% by weight.

2. A prepolymer, according to claim 1, of alkali metal silicates and/or alkaline earth metal silicates and metal oxides, which is obtained by a method wherein a homogenised mixture of solid alkali metal

12

silicates and/or alkaline earth metal silicates, and aqueous solutions of such silicates, and divalent to tetravalent metal oxides, the proportion of silicate in aqueous solution in the mixture being less than 33% by weight, based on the total dry amount of silicate, and the ratio of metal oxide to silicate being from 1:1 to 1:6, expressed as parts by weight of solids, and the mixture, homogenised not above 30°C and having a water content of from 25 to 50% by weight, based on the total amount of mixture, is allowed to react in the temperature range of 20 to 50°C until the water content of the mixture has decreased by from 0.1 to 20% by weight and a product which is sufficiently tough and dry to permit comminution is obtained, and this product is granulated or ground and then heated at temperatures of up to 120°C until the prepolymer obtained has a water content of from 15 to 4% by weight.

3. A prepolymer according to either of claims 1 or 2, obtained from a homogenised mixture of solid hydrated alkali metal silicates and alkaline earth metal silicates and an aqueous solution of alkali metal silicates, and divalent metal oxides, the homogenised mixture having a water content of from 30 to 45% by weight.

4. A prepolymer according to either of claims 1 or 2, obtained from a homogenised mixture of solid hydrated alkali metal silicates and an aqueous solution of alkali metal silicates and zinc oxide.

5. A prepolymer according to claim 4, obtained from a homogenised mixture of solid sodium silicate and an aqueous solution of sodium silicate and zinc oxide.

6. A process for the preparation of a prepolymer of alkali metal silicates and/or alkaline earth metal silicates and metal oxides, wherein a mixture of solid alkali metal silicates and/or alkaline earth metal silicates, and aqueous solutions of such silicates, with or without addition of water, and of divalent to tetravalent metal oxides, the ratio of metal oxide to silicate in the mixture being from 1:1 to 1:9, expressed in parts by weight of solids, and the mixture, homogenised not above 30°C and having a water content of from 10 to 50% by weight, based on the total amount of mixture, is allowed to react in the temperature range of 10 to 50°C until the water content of the mixture has decreased by from 0.1 to 25% by weight and a product which is sufficiently tough and dry to permit comminution is obtained, and this product is comminuted and then heated at temperatures of up to 120°C until the prepolymer obtained has a water content of from 20 to 2% by weight.

7. A process according to claim 6, wherein a homogenised mixture of solid alkali metal silicates and alkaline earth metal silicates, and aqueous solutions of such silicates, and divalent to tetravalent metal oxides, the proportion of silicate in aqueous solution in the mixture being less than 33% by weight, based on the total dry amount of silicate, and the ratio of metal oxide to silicate being from 1:1 to 1:6, expressed as parts by weight of solids, and the mixture, homogenised not above 30°C and having a water content of from 25 to 50% by weight, based on the total amount of mixture, is allowed to react in the temperature range of 20 to 50°C until the water content of the mixture has decreased by from 0.1 to 20% by weight and a product which is sufficiently tough and dry to permit comminution is obtained, and this product is granulated or ground and then heated at temperatures of up to 120°C until the prepolymer obtained has a water content of from 15 to 4% by weight.

8. A process according to claim 6, wherein a homogenised mixture of solid hydrated alkali metal silicates and alkaline earth metal silicates, and an aqueous solution of alkali metal silicates, and divalent metal oxides, the homogenised mixture having a water content of from 30 to 45% by weight, is used.

9. The use of a prepolymer according to claim 1 as a moulding composition, preferably a compression moulding composition, which is either unfilled or provided with fillers and/or reinforcing agents.

10. The use of a prepolymer according to claim 1 for the production of compression-mouldable laminates or of insulating sheets.

## Revendications

1. Prépolymères dérivant de silicates de métaux alcalins et/ou de métaux alcalino-terreux et d'oxydes métalliques, prépolymères caractérisés en ce qu'on les a obtenus en faisant réagir un mélange de silicates de métaux alcalins et/ou de métaux alcalino-terreux solides et dissous dans de l'eau, éventuellement avec addition d'eau, et d'oxydes de métaux divalents à quadrivalents, le rapport pondéral de l'oxyde métallique au silicate dans le mélange étant compris entre 1:1 et 1:9 (en substances sèches) et le mélange, homogénéisé à une température ne dépassant pas 30°C, ayant une teneur en eau de 10 à 50% en poids par rapport à la quantité total du mélange, dans un intervalle de températures allant de 10 à 50°C jusqu'à ce que la teneur en eau du mélange ait baissé d'une valeur comprise entre 0,1 et 25% en poids et qu'on ait obtenu en produit suffisamment sec et tenace pour pouvoir subir un broyage, on broie ce produit, puis on le chauffe à des températures allant jusqu'à 120°C jusqu'à ce que le prépolymère obtenu ait une teneur en eau de 20 à 2% en poids.

2. Prépolymères selon la revendication 1, dérivant de silicates de métaux alcalins et/ou de métaux alcalino-terreux et d'oxydes métalliques, caractérisés en ce qu'on les a obtenus en faisant réagir un mélange homogénéisé de silicates de métaux alcalins et/ou de métaux alcalino-terreux solides et dissous dans de l'eau et d'oxydes de métaux divalants à quadrivalents, la proportion du silicate dissous dans l'eau étant, dans le mélange, inférieure à 33% en poids par rapport à la quantité totale de silicate sec, le rapport pondéral de l'oxyde métallique au silicate étant compris entre 1:1 et 1:6 (en substances sèches) et le mélange, homogénéisé à une température ne dépassant pas 3°C, ayant une teneur en eau de 25 à 50% en poids par rapport à la quantité totale du mélange, dans un intervalle de température allant de 20 à 50°C jusqu'à ce que la teneur en eau du mélange ait baissé d'une valeur comprise entre 0,1 et 20% poids et qu'on ait obtenu un produit suffisamment sec et tenace pour pouvoir être broyé, on granule ou on broie celui-ci et ensuite on le chauffe à des températures d'au plus 120°C jusqu'à ce que le prépolymère obtenu ait une teneur en eau de 15 à 4% en poids.

3. Prépolymères selon l'une des revendications 1 et 2, qui ont été obtenus à partir d'un mélange homogénéisé de silicates de métaux alcalins et de métaux alcalino-terreux hydratés solides et de silicates de métaux alcalins dissous dans de l'eau, ainsi que d'oxydes de métaux divalents, le mélange homogénéisé ayant une teneur en eau de 30 à 45% en poids.

4. Prépolymères selon l'une des revendications 1 et 2, qui ont été obtenus à partir d'un mélange homogénéisé de silicates de métaux alcalins hydratés solides et dissous dans de l'eau et d'oxyde de zinc.

5. Prépolymères selon la revendication 4, qui ont été obtenus à partir d'un mélange homogénéisé de silicate de sodium solide, de silicate de sodium dissous dans l'eau et d'oxyde de zinc.

6. Procédé de préparation de prépolymères dérivant de silicates de métaux alcalins et/ou de métaux alcalino-terreux et d'oxydes métalliques, procédé caractérisé en ce qu'on fait réagir un mélange de silicates de métaux alcalins et/ou de métaux alcalino-terreux solides et dissous dans de l'eau, éventuellement avec addition d'eau, et d'oxydes de métaux divalents à quadrivalents, le rapport pondéral de l'oxyde métallique au silicate dans le mélange étant compris entre 1:1 et 1:9 (en substances sèches) et le mélange, homogénéisé à une température ne dépassant pas 30°C, ayant une teneur en eau de 10 à 50% en poids par rapport à la quantité totale du mélange, dans un intervalle de température allant de 10 à 50°C jusqu'à ce que la teneur en eau du mélange ait baissé d'une valeur comprise entre 0,1 et 25% en poids et qu'on ait obtenu un produit suffisamment sec et tenace pour pouvoir subir un broyage, on broie ce produit et ensuite on le chauffe à des températures d'au plus 120°C jusqu'à ce que le prépolymère obtenu ait une teneur en eau de 20 à 2% en poids.

7. Procédé selon la revendication 6, caractérisé en ce qu'on fait réagir un mélange homogénéisé de silicates de métaux alcalins et de métaux alcalino-terreux solides et dissous dans de l'eau et d'oxydes de métaux divalents à quadrivalents, la proportion pondérale, dans le mélange, du silicate dissous dans l'eau étant inférieure à 33% en poids par rapport à la quantité totale de silicate sec, le rapport pondéral de l'oxyde métallique au silicate étant compris entre 1:1 et 1:6 et le mélange, homogénéisé à une température ne dépassant pas 30°C, ayant une teneur en eau de 25 à 50% en poids par rapport à la quantité totale du mélange, dans un intervalle de température allant de 20 à 50°C jusqu'à ce que la teneur en eau du mélange ait baissé d'une valeur comprise entre 0,1 et 20% en poids et qu'on ait obtenu un produit suffisamment sec et tenace pour pouvoir être broyé, on granule ou broie ce produit, puis on le chauffe à des températures d'au plus 120°C jusqu'à ce que le prépolymère obtenu ait une teneur en eau de 15 à 4% en poids.

8. Procédé selon la revendication 6, caractérisé en ce qu'on utilise un mélange homogénéisé de silicates de métaux alcalins et de métaux alcalino-terreux hydratés solides et de silicates de métaux alcalins dissous dans de l'eau ainsi que d'oxydes de métaux divalents, le mélange homogénéisé ayant une teneur en eau de 30 à 45% en poids.

9. Application des prépolymères selon la revendication 1 comme matière à mouler, de préférence comme matière à mouler par compression, non chargée ou additionnée de charges et/ou d'agents de renforcement.

10. Application des prépolymères selon la revendication 1 à la fabrication de plaque isolantes ou de stratifiés pouvant être moulés par compression.

14